# EUROPÄISCHE PATENTANMELDUNG

(11) **EP 0 871 021 A2**
(43) Veröffentlichungstag der Anmeldung: **14.10.1998**
(21) Anmeldenummer: 98105209.5
(22) Anmeldetag: 23.03.1998
(51) Int. Cl.: G01H 3/00, G10K 11/00

(54) **Akustischer sensor**

(30) Priorität: 08.04.1997 DE 19714422
(71) Anmelder: STN ATLAS Elektronik GmbH, 28305 Bremen (DE)
(72) Erfinder: Becker, Gunnar, 28199 Bremen (DE); Hansen, Karl-Emil, 27283 Verden (DE); Klemp, Jürgen, 28832 Achim (DE)

(57) **Zusammenfassung**

Ein akustischer Sensor zur Anordnung an mobilen Plattformen, wie Land-, Luft- und Wasserfahrzeugen, weist ein Meßmikrophon (12) und einen das Meßmikrophon (12) umschließenden Windschutz (13) auf. Zwecks Schaffung eines akustischen Sensors (10) mit einer für den militärischen Einsatz geforderten Robustheit gegen mechanische Belastung und einem guten S/N-Verhältnis weist der Windschutz (13) eine das Meßmikrophon (12) zentral einschließende Schaumstoffscheibe (14) aus stark offenporigem Schaumstoff auf, die zwischen zwei trittfest gegeneinander abgestützten steifen Platten (15, 16) eingelegt ist. Die Scheibendicke ist wesentlich kleiner als die Wellenlänge der größten Schallfrequenz eines zur Sensierung definierten Frequenzbereichs und der Scheibendurchmesser ein Vielfaches der Scheibendicke bemessen.

## Beschreibung

Die Erfindung betrifft einen akustischen Sensor zur Anordnung an mobilen Plattformen, wie Land-, Luft- und Wasserfahrzeugen, der im Oberbegriff des Anspruchs 1 definierten Gattung.

Akustische Sensoren werden im militärischen Bereich im Verbund zur Detektion und Ortung von Schallquellen eingesetzt, wie sie beispielsweise durch feuernde Geschütze (Knall) oder Hubschrauber (Antriebsgeräusch) dargestellt werden. Diese passiven akustischen Sensoren weisen ein Meßmikrophon für den Schallempfang auf, das zur Reduzierung eines durch Umgebungsgeräusche, wie Wind und Regen, verursachten Störschalls mit einem Windschutz umgeben ist. Ein solcher, das Meßmikrophon im Abstand umschließender Windschutz, verlagert die vom Wind oder Regen ausgelösten Strömungsturbulenzen von der Oberfläche des Meßmikrophons weg auf die Oberfläche des Windschutzes. Am Meßmikrophon wird dann nur noch der Nettoeffekt der Turbulenzen als Integration der Turbulenzen über die Windschutzoberfläche hinweg gemessen. Das vom Meßmikrophon noch erfaßte windinduzierte Störsignal wird dabei mit wachsendem Abstand der Windschutzoberfläche vom Meßmikrophon zunehmend reduziert.

Bei Verwendung solcher akustischer Sensoren auf mobilen Plattformen, wie geländegängigen Kampf- oder Aufklärungsfahrzeugen, sind die Sensoren zusätzlich extremen äußeren Einflüssen ausgesetzt, wie z.B. Schmutz und erheblichen mechanischen Belastungen. Der übliche Windschutz in Form von Schaumstoffbällen kann zwar hinreichend die Meßmikrophone gegen schwachen Wind und Regen schützen, nicht aber gegen Schmutz und insbesondere nicht gegen mechanische Belastungen, wie sie beispielsweise durch schlagende Äste bei Fahrten durch Waldgebiet, Begehung des Fahrzeugs etc. verursacht werden können.

Der Erfindung liegt die Aufgabe zugrunde, einen akustischen Sensor, insbesondere für den militärischen Einsatz, zu schaffen, der robust ist, erhebliche mechanische Belastungen ohne Beschädigung oder Zerstörung des Meßmikrophons aufnehmen kann und zudem gute akustische Meßeigenschaften auch im Infraschallbereich (f<20 Hz) besitzt.

Die Aufgabe ist bei einem akustischen Sensor der im Oberbegriff des Anspruchs 1 angegebenen Gattung erfindungsgemäß durch die Merkmale im Kennzeichenteil des Anspruchs 1 gelöst.

Der erfindungsgemäße akustische Sensor hat den Vorteil, eine extrem belastbare Baueinheit und zudem noch hinsichtlich der Unterdrückung von windinduzierten Störgeräuschen herkömmlichen Sensoren überlegen zu sein. Die flache Diskusform des Sensors läßt sich gut in die Kontur der mobilen Plattform, insbesondere in die Fahrzeugsilhouette integrieren, wobei die Sensoren auch Trittbelastungen widerstehen, was insbesondere bei Fahrzeugen mit Lukeneinstieg, z.B. Kampf-, Aufklärungs- oder Schützenpanzern, von Vorteil ist.

Zweckmäßige Ausführungsformen des erfindungsgemäßen akustischen Sensors mit vorteilhaften Weiterbildungen und Ausgestaltungen der Erfindung ergeben sich aus den weiteren Ansprüchen.

Gemäß einer vorteilhaften Ausführungsform der Erfindung ist die eine Platte des diskusartigen akustischen Sensors zur Befestigung an der mobilen Plattform ausgebildet und die von der Schaumstoffscheibe abgekehrte Oberfläche der anderen Platte mit einer geräuschdämpfenden Schicht versehen. Durch diese Beschichtung der Diskusoberfläche mit schalldämmendem Material, z.B. Schaumstoff, wird Störschall, der von auf die Diskusoberfläche aufprasselndem Regen ausgelöst wird, weitgehend unterdrückt.

Gemäß einer bevorzugten Ausführungsform der Erfindung weist die Schaumstoffscheibe Zylinderform auf und die Platten sind bündig mit dem Zylindermantel ausgebildet. Die steifen Platten werden bevorzugt aus Aluminiumblech gefertigt und durch in Umfangsrichtung zueinander versetzt angeordnete Distanzstege gegeneinander abgestützt. Das Meßmikrophon wird in eine radiale Bohrung in der Schaumstoffscheibe eingeschoben und damit "weich" in der Baueinheit gelagert, so daß zusätzlich eine Entkopplung von Körperschall erreicht wird. In einer optimierten Ausführungsform der Erfindung beträgt der Scheibendurchmesser der Schaumstoffscheibe 30 cm und die Scheibendicke 5 cm. Bei einer Schallfrequenz von ca. 150 Hz wird damit ein S/N-Gewinn von -15 dB gegenüber herkömmlichen Sensoren erzielt.

Der erfindungsgemäße akustische Sensor wird bevorzugt in einem Sensorverband oder Array zur Detektion von Kampfhubschraubern von einem Rad- oder Kettenfahrzeug aus verwendet. Dabei wird eine Vielzahl der erfindungsgemäßen Sensoren auf der von den Rädern oder Ketten abgekehrten Oberseite des Fahrzeugs befestigt. Besitzt das Fahrzeug eine Wanne mit drehbaren Turm, so sind die akustischen Sensoren auf der Oberseite der Wanne und/oder des Turms an geeigneten Stellen plaziert.

Die Erfindung ist anhand eines in der Zeichnung dargestellten Ausführungsbeispiels im folgenden näher beschrieben. Es zeigen:
- Fig. 1: eine perspektivische Darstellung eines akustischen Sensors, teilweise aufgeschnitten,
- Fig. 2: eine perspektivische Darstellung eines Kampfpanzers mit einem Array aus einer Vielzahl der akustischen Sensoren gemäß Fig. 1.

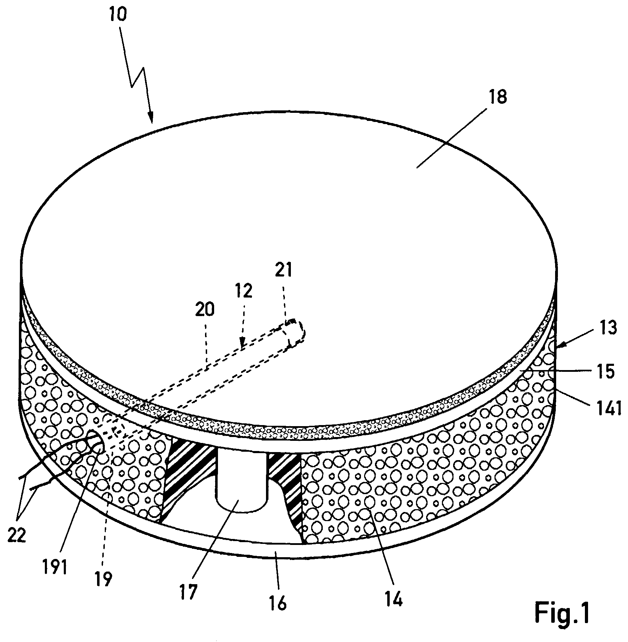

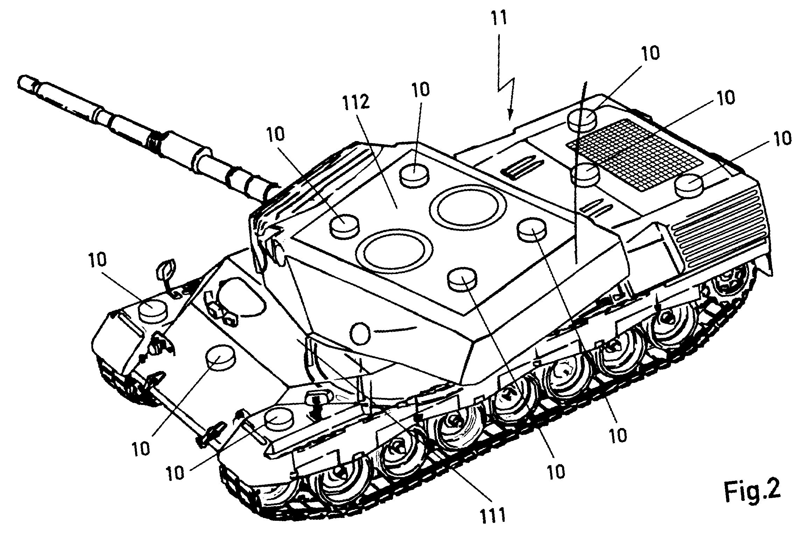

Der in Fig. 1 in perspektivischer Ansicht zu sehende akustische Sensor 10 ist zur Anordnung auf mobilen Plattformen vorgesehen, wie sie durch Land-, Luft- und Wasserfahrzeugen repräsentiert werden. Die Anordnung des akustischen Sensors 10 auf einem Kampfpanzer 11 als Ausführungsbeispiel für ein Landfahrzeug ist in Fig. 2 zu sehen.

Der akustische Sensor 10 weist ein Meßmikrophon 12 und einen dieses umschließenden Windschutz 13 auf. Hier verwendbare Meßmikrophone werden beispielsweise von der Firma Sennheiser im Handel angeboten und weisen ein zylinderförmiges Mikrophongehäuse von ca. 15 cm Länge und 1,5 cm Durchmesser auf, an dessen einem Ende eine durch einen Drahtkorb geschützte Mikrophonkapsel angeordnet ist. Andere Meßmikrophone extrem kleiner Bauart besitzen eine zylinderförmige Mikrophonkapsel von 5 bis 6 mm Durchmesser und eine Zylinderhöhe von 3 mm, die von einem Sintermetallgehäuse geschützt ist. Der Windschutz 13 weist eine zylinderförmige Schaumstoffscheibe 14 aus stark offenporigem Schaumstoff auf, die zwischen zwei steifen Platten 15, 16 angeordnet ist. Die beiden Platten 15, 16 überdecken die beiden voneinander abgekehrten Scheibenflächen der Schaumstoffscheibe 14 und sind bündig mit dem Zylindermantel 141 der Schaumstoffscheibe 14 ausgeführt. Die beiden Platten 15, 16 sind durch Distanzstege 17 trittfest gegeneinander abgestützt, so daß bei Einwirken einer mechanischen Kraft auf die Außenseiten der Platten 15, 16 die Schaumstoffscheibe 14 nicht zusammengedrückt werden kann. Im Ausführungsbeispiel der Fig. 1 sind insgesamt drei Distanzstege 17 vorgesehen, die um jeweils 120° Umfangswinkel gegeneinander versetzt auf einen Teilerkreis angeordnet und mit ihren Stirnflächen an den beiden Platten 15, 16 befestigt sind. Die Distanzstege 17 sind dabei durch axiale Bohrungen in der Schaumstoffscheibe 14 hindurchgeführt. In Fig. 1 ist von den insgesamt drei vorhandenen Distanzstegen 17 nur einer dargestellt. Die Platten 15, 16 sind im Ausführungsbeispiel aus Aluminiumblech gefertigt. Die Verwendung von anderem Material mit ausreichend hoher Belastbarkeit, z.B. auch Kunststoff, für die Platten 15, 16 ist möglich. Zur Anordnung auf einer mobilen Plattform sind an der unteren Platte 16 entsprechende, hier nicht dargestellte Befestigungsmittel vorgesehen. Die obere Platte 15 ist auf ihrer von der Schaumstoffscheibe 14 abgekehrten Oberfläche mit einer geräuschdämpfenden Schicht 18 versehen, die im Ausführungsbeispiel der Fig. 1 aus grobporigem Schaumstoff besteht und als dünne Folie auf die Plattenoberfläche aufgeklebt ist. Diese geräuschdämpfende Schicht 18 reduziert Störschall, der von auf die Oberfläche der Platte 15 aufprasselndem Regen ausgelöst wird.

Das Meßmikrophon 12 ist im Innern der Schaumstoffscheibe 14 "weich" gelagert, wozu in die Schaumstoffscheibe 14 mittig, d.h. auf halbe axiale Länge, eine Sackbohrung 19 eingebracht ist, die zentral in der Achse der Schaumstoffscheibe 14 mündet. In diese Sackbohrung 19 ist das Mikrophon 12 so eingeschoben, daß die an dem vorderen Ende des zylinderförmigen Mikrophongehäuses 20 angeordnete Mikrophonkapsel 21 im Zentrum der Schaumstoffscheibe 14 liegt. Aus dem Mikrophongehäuse 20 herausgeführte Anschlußdrähte 22 treten aus der Bohrungsöffnung 191 in dem Zylindermantel 141 der Schaumstoffscheibe 14 aus.

Um ein gutes Stör- zu Nutzverhältnis (S/N-Verhältnis) des Sensors 10 zu erhalten, wird einerseits die Scheibendicke der Schaumstoffscheibe 14 auf den Schallfrequenzbereich abgestellt, der von dem Sensor 10 erfaßt werden soll, und andererseits ein möglichst großer Abstand der Mikrophonkapsel 21 zu der Oberfläche des Windschutzes 13, also zum Zylindermantel 141 der Schaumstoffscheibe 14, realisiert. Die größte, im Frequenzbereich auftretende Schallfrequenz bestimmt dabei die Bemessung der Schaumstoffscheibendicke, die wesentlich kleiner gewählt wird als die Wellenlänge der maximalen Schallfrequenz. Der Scheibendurchmesser wird um ein Vielfaches der Scheibendicke bemessen. In einem optimierten Ausführungsbeispiel beträgt die Scheibendicke der Schaumstoffscheibe ca. 5 cm und der Scheibendurchmesser ca. 30 cm. Die maximale Frequenz des definierten Meßbereichs der Schallfrequenzen ist auf ca. 150 Hz festgelegt.

Ein praktischer Einsatzfall des in Fig. 1 dargestellten und wie vorstehend beschriebenen akustischen Sensors 10 ist in Fig. 2 dargestellt. Die größte Bedrohung für das militärische Einsatzprofil von Kampfpanzern sind Kampfhubschrauber. Hubschrauberaufklärung und -bekämpfung sind daher wesentliches Anliegen eines Panzerverbandes im Kampfeinsatz. Hierzu fahren im Kampfverband spezielle Aufklärung- und Kampfpanzer mit, die mit akustischen Mitteln zur Detektion von Hubschraubern und mit Raketen zur Hubschrauberbekämpfung ausgerüstet sind. Solch eine akustische Hubschrauberdetektionsvorrichtung weist eine Flächenantenne oder ein sog. Array aus einer Vielzahl von einzelnen akustischen Sensoren auf, aus deren akustoelektrisch gewandelten Empfangssignalen mittels einer geeigneten elektrischen Signalverarbeitung nicht nur ein anfliegender Hubschrauber oder Hubschrauberverband erkannt, sondern auch Richtung und Entfernung des Hubschraubers bzw. Hubschrauberverbands ermittelt werden können. Mit dem vorstehend beschriebenen und in Fig. 1 dargestellten akustischen Sensor 10 kann nunmehr eine solche akustische Flächenantenne in neuartiger Weise auf dem Kampfpanzer 11 dadurch verwirklicht werden, daß die akustischen Sensoren 10 auf der vom Boden abgekehrten Oberseite des Kampfpanzers 11 angeordnet sind. Im Ausführungsbeispiel der Fig. 2 sind die Sensoren 10 sowohl auf der Oberseite der Panzerwanne 111 als auch auf der Oberseite des auf der Panzerwanne 111 drehbar sitzenden Panzerturms 112 angeordnet. Dabei sind insgesamt sechs akustische Sensoren 10 auf die Oberseite der Panzerwanne 111 verteilt, wobei jeweils drei nahe der Rückseite und nahe der Vorderseite der Panzerwanne 111 angeordnet sind, und auf der Oberseite des Panzerturms 112 sind vier Sensoren 10 befestigt. Durch die beschriebene Ausführung der akustischen Sensoren 10 als robuste, gegen mechanische Belastung resistente Baueinheiten ist die Funktionsweise der akustischen Flächenantenne auch bei rauhestem Einsatz zuverlässig gewährleistet.

## Patentansprüche

1. Akustischer Sensor zur Anordnung an mobilen Plattformen, wie Land-, Luft- und Wasserfahrzeugen, mit einem Meßmikrophon (12) und einem das Meßmikrophon (12) umschließenden Windschutz (13), dadurch gekennzeichnet, daß der Windschutz (13) eine das Meßmikrophon (12) zentral einschließende Schaumstoffscheibe (14) aus stark offenporigem Schaumstoff aufweist, deren Scheibendicke wesentlich kleiner ist als die Wellenlänge der größten Schallfrequenz eines zur Sensierung definierten Frequenzbereichs und deren Scheibendurchmesser ein Vielfaches der Scheibendicke beträgt, und daß die Schaumstoffscheibe (14) zwischen zwei trittfest gegeneinander abgestützen steifen Platten (15, 16) eingelegt ist, die die beiden voneinander abgekehrten, ebenen Scheibenflächen überdecken.

2. Sensor nach Anspruch 2, dadurch gekennzeichnet, daß die eine Platte (16) zur Befestigung an der mobilen Plattform ausgebildet ist und die von der Schaumstoffscheibe (14) abgekehrte Oberfläche der anderen Platte (15) mit einer geräuschdämpfenden Schicht (18) versehen ist.

3. Sensor nach Anspruch 2, dadurch gekennzeichnet, daß die geräuschdämpfende Schicht (18) aus grobporigem Schaumstoff besteht, der als dünne Folie auf die Plattenoberfläche aufgeklebt ist.

4. Sensor nach einem der Ansprüche 1 bis 3, dadurch gekennzeichnet, daß die Schaumstoffscheibe (14) Zylinderform aufweist und die Platten (15, 16) bündig mit dem Zylindermantel (141) ausgebildet sind.

5. Sensor nach einem der Ansprüche 1 bis 4, dadurch gekennzeichnet, daß die steifen Platten (15, 16) aus Aluminiumblech gefertigt sind, die durch mindestens drei um vorzugsweise gleiche Umfangswinkel zueinander versetzt angeordnete Distanzstege (17) miteinander verbunden sind.

6. Sensor nach einem der Ansprüche 1 bis 5, dadurch gekennzeichnet, daß das Meßmikrophon (12) ein zylinderförmiges Mikrophongehäuse (20) und eine an dem einen Ende des Mikrophongehäuses (20) angeordnete Mikrophonkapsel (21) aufweist und daß die Schaumstoffscheibe (14) mittig eine zentral endende radiale Sackbohrung (19) aufweist, in der das Mikrophon (12) mit im Zentrum der Schaumstoffscheibe (14) liegender Mikrophonkapsel (21) eingeschoben ist.

7. Sensor nach einem der Ansprüche 4 bis 6, dadurch gekennzeichnet, daß die Scheibendicke ca. 5 cm und der Scheibendurchmesser der Schaumstoffscheibe (14) ca. 30 cm beträgt.

8. Sensor nach einem der Ansprüche 1 bis 7, gekennzeichnet durch seine Verwendung zur Detektion von Kampfhubschraubern von einem Rad- oder Kettenfahrzeug aus, indem eine Vielzahl von Sensoren (10) auf der von den Rädern oder Ketten abgekehrten Oberseite des Fahrzeugs (11) befestigt ist.

9. Aus akustischen Sensoren (10) nach einem der Ansprüche 1 bis 7 zusammengesetzte akustische Flächenantenne (Array) für akustische Hubschrauberaufklärung von einem Rad- oder Kettenfahrzeug aus, dadurch gekennzeichnet, daß die Sensoren (10) auf der von den Rädern oder Ketten abgekehrten Oberseite des Fahrzeugs (11) befestigt sind.

10. Flächenantenne nach Anspruch 9, dadurch gekennzeichnet, daß die Sensoren 10 auf der Oberseite von Panzerwanne (111) und/oder Panzerturm (112) eines Panzerwanne (11) und darauf drehbaren Panzerturm (112) aufweisenden Rad- oder Kettenfahrzeugs angeordnet sind.
